# FASCICULE DE BREVET EUROPEEN

(11) **EP 1 949 803 B1**
(45) Date de publication et mention de la délivrance du brevet: **12.08.2009**
(21) Numéro de dépôt: 08100558.9
(22) Date de dépôt: 16.01.2008
(51) Int. Cl.: A23L 2/02, A47J 19/02, A23N 1/02, A23L 2/04

(54) **Appareil d'extraction du jus et de la pulpe de produits végétaux pour grosse introduction et tamis associé**
Gerät zur Extraktion von Saft und Fruchtfleisch aus pflanzlichen Produkten zur Großeinführung und entsprechendes Sieb
Device for extracting juice and pulp from vegetable products by forced insertion and associated screen

(30) Priorité: 24.01.2007 FR 0752864
(43) Date de publication de la demande: 30.07.2008
(73) Titulaire: Hameur S.A., 2412 Luxembourg (LU)
(72) Inventeur: Gonneaud, Patrick, 71230 Saint Romain sous Gourdon (FR); Lazzer, Jean-Pierre, 71210 Montchanin (FR)
(74) Mandataire: Schmit, Christian Norbert Marie

(56) Documents cités:
- DE-B- 1 060 113
- FR-A- 1 155 634
- US-A- 2 527 695
- US-A- 3 106 948
- US-A1- 2005 235 839

## Description

L'invention concerne une centrifugeuse ou appareil d'extraction du jus et de la pulpe d'aliments ou de produits végétaux. Par produits végétaux, on entend, des fruits du type pomme, poire, fraise, banane, etc. Par produits végétaux, on entend, également légumes du type pomme de terre, carotte, radis, navet, etc. L'invention a pour but de faciliter la manipulation d'un tel appareil. L'invention concerne le domaine de l'alimentation et des appareils de traitement des aliments.

Une centrifugeuse comporte une cuve, un tamis cylindrique d'axe de symétrie X-X', un socle et un poussoir. Le socle renferme un moteur électrique entraînant en rotation un arbre d'entraînement qui s'étend en dehors du socle. La cuve est posée fixée sur le socle tout en étant traversée par l'arbre d'entraînement. Le tamis est placé en suspension dans la cuve en étant supporté et entraîné en rotation autour de l'axe X-X' par l'intermédiaire de l'arbre d'entraînement. Le poussoir pousse les produits végétaux dans le tamis en appui contre un fond du tamis.

Dans l'état de la technique comme par exemple le brevet FR 1 155 634 ou la demande du brevet US 2005/0235839, on connaît une centrifugeuse qui comporte un tamis présentant une paroi radiale et un fond. La paroi radiale est percée de trous et le fond est plein. Ce fond présente des moyens de dilacération des produits introduits dans la centrifugeuse sur une face interne du tamis. Ces moyens de dilacération râpent les produits. Les produits ainsi râpés sont ensuite expulsés, par centrifugation, en direction et au travers de la paroi radiale en vue d'extraire leur jus. L'avantage de cette centrifugeuse est que le jus obtenu est pur et que le rendement est élevé.

Cependant, les pépins, les morceaux de peaux, les fibres et des talons se plaquent contre la paroi radiale du tamis et tournent avec le tamis. Un talon est le dernier morceau restant du produit végétal après traitement. En effet, la centrifugeuse fonctionne avec le poussoir qui est fixe et le tamis qui tourne. Pour éviter que le poussoir frotte contre le tamis en rotation et que le poussoir et le tamis ne soient abîmés l'un par l'autre, un jeu doit exister entre le poussoir et le tamis. Ainsi, du fait de ce jeu, des talons de produits végétaux apparaissent à la surface du tamis après insertion complète du poussoir dans la goulotte.

Or, la présence de ces talons déséquilibre le tamis en cours de rotation. La rotation du tamis revêtu de ces talons entraîne des vibrations de la centrifugeuse. Ces vibrations créent des déplacements de la centrifugeuse en cours de fonctionnement.

On connaît un autre type de centrifugeuse équipée d'une goulotte de section de relativement petite taille. Par section de relativement petite taille, on entend que la goulotte permet l'introduction de produits végétaux sous forme découpée et/ou sous forme de petites tailles. Une telle centrifugeuse permet l'obtention de talons de faibles dimensions. Par talons de faibles dimensions on entend que la présence de tels talons n'est pas génératrice de vibrations de la centrifugeuse au cours de son fonctionnement. Mais la découpe préalable en plusieurs morceaux des produits végétaux est consommatrice en temps pour l'utilisateur de la centrifugeuse.

Il existe encore une autre centrifugeuse qui comporte un tamis avec une paroi radiale formant une portion tronconique dont la section la plus étroite du cône est située proche du fond du tamis. Cette paroi radiale est trouée de telle manière qu'elle ne laisse passer que le jus, mais pas les fibres des aliments. Le fond du tamis est plan et denté. Le fond du tamis forme comme une râpe à fromage. Les produits végétaux sont appuyés contre ce fond par le poussoir tout en étant râpés par ce même fond de manière à extraire le jus de ces produits. L'avantage présenté par cette centrifugeuse est que la pulpe des fruits par exemple ne reste pas dans le tamis, elle est éjectée dans un bac situé à côté de la cuve. Par contre, le jus n'est pas pur et le rendement est médiocre.

Pour résoudre ces problèmes, l'invention prévoit de réaliser une modification de la forme du fond du tamis de manière à obtenir des talons de tailles réduites à partir de produits végétaux entiers, non découpés. Les talons obtenus sont de dimensions telles qu'ils ne provoquent pas de vibrations de la centrifugeuse au cours de son fonctionnement. La section de la goulotte peut être aussi grande que la section du tamis.

La centrifugeuse, selon l'invention, présente une paroi radiale percée et un fond plein ne laissant pas passer les produits au travers. Dans l'invention, le fond du tamis présente une forme étagée, c'est-à-dire que le fond du tamis est en forme d'escalier. Le fond du tamis comporte plusieurs niveaux. Le fond du tamis peut être composé de 2,3,4,5,6,7..... niveaux, avec une forme d'escalier montant ou descendant, de façon complètement aléatoire. Par forme d'escalier montant, on entend, que le fond du tamis est surélevé de manière progressive depuis une périphérie du tamis vers un centre de ce tamis par rapport à un plan dans lequel s'étend une table de travail sur laquelle est positionnée la centrifugeuse en position normale de fonctionnement. Par forme d'escalier descendant, on entend, que le fond du tamis est surélevé de manière progressive depuis le centre du tamis vers la périphérie de ce même tamis par rapport au plan de la table de travail.

Le poussoir peut être de forme complémentaire à celle du fond du tamis. Au fur et à mesure que le poussoir est inséré dans la goulotte, le produit végétal est réduit en au moins un talon dont la taille est réduite à une largeur du niveau le plus proche de la périphérie externe du fond du tamis.

La centrifugeuse, selon l'invention, permet l'introduction de produits végétaux sous leur forme entière, sans qu'une découpe préalable en plusieurs morceaux soit nécessaire préalablement à leur insertion dans la goulotte.

La centrifugeuse selon l'invention permet à l'utilisateur de gagner du temps.

La centrifugeuse selon l'invention est facile d'utilisation.

L'invention a donc pour objet un appareil d'extraction du jus et de la pulpe d'aliments comportant
- un socle renfermant un moteur électrique à partir duquel s'étend un arbre d'entraînement en rotation,
- une cuve posée sur le socle et traversée par l'arbre d'entraînement,
- une goulotte d'entrée de l'aliment,
- un tamis placé dans la cuve et étant supporté et entraîné en rotation par l'arbre d'entraînement, le tamis comportant une paroi radiale percée de plusieurs trous et un fond plein, l'aliment étant destiné à être au contact du fond et de la paroi tout en transitant au travers des trous, et
- un poussoir insérable dans la goulotte, l'aliment étant maintenu en appui contre le fond du tamis par l'intermédiaire du poussoir en vue d'extraire de cet aliment son jus qui se récolte dans la cuve située en dessous du tamis, caractérisée en ce que
- le fond du tamis est étagé.

L'invention a également pour objet un tamis d'un appareil d'extraction du jus et de la pulpe d'aliments, le tamis comportant une paroi radiale et un fond, la paroi du tamis étant percée de trous au travers desquels est destiné à transiter l'aliment après pression de ce même aliment contre la paroi du tamis, le fond du tamis étant plein, caractérisé en ce que le fond du tamis est étagé.

L'invention sera mieux comprise à la lecture de la description qui suit et à l'examen des figures qui l'accompagnent. Celles-ci ne sont données qu'à titre illustratif et nullement limitatif de l'invention. Les figures montrent :
- Figure 1 : une représentation schématique partielle d'un appareil d'extraction, selon l'invention, et
- Figures 2a à 2c : des représentations schématiques des étapes de traitement d'un produit végétal par un appareil d'extraction, selon l'invention.

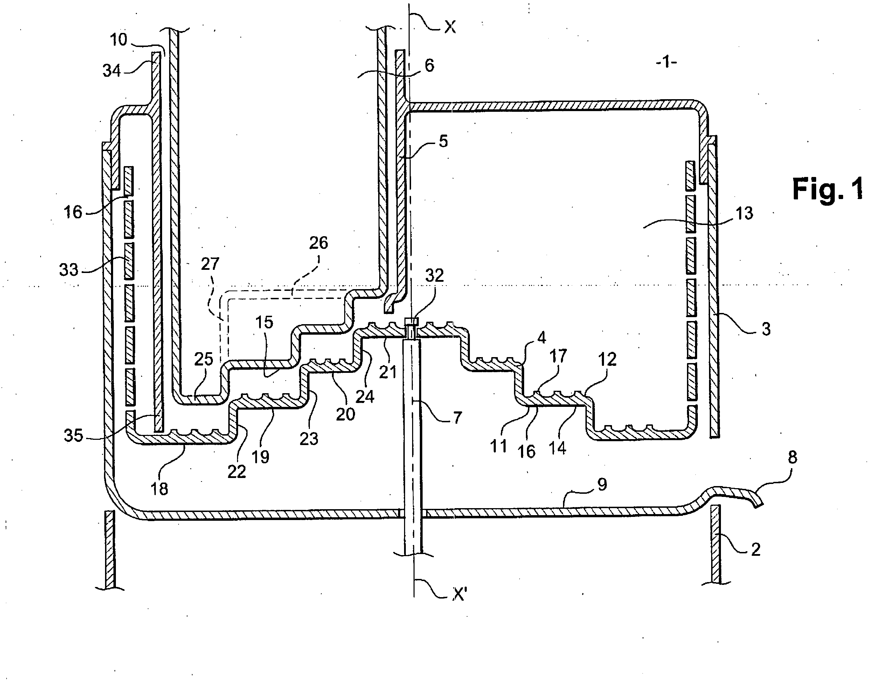

La figure 1 illustre une centrifugeuse 1 ou appareil d'extraction qui est adapté pour extraire le jus et la pulpe de produits végétaux, essentiellement des fruits et des légumes. La centrifugeuse 1 comporte un socle 2, une cuve 3, un tamis 4, une goulotte 5 d'entrée des produits végétaux et un poussoir 6. Le socle 2 renferme un moteur électrique (non représenté) à partir duquel s'étend un arbre d'entraînement en rotation 7. L'arbre d'entraînement 7 s'étend en dehors du socle 2. La cuve 3 est sensiblement cylindrique et forme un récipient creux. La cuve 3 est posée fixée sur le socle 2 tout en étant traversée par l'arbre d'entraînement 7. Le tamis 4 est également sensiblement cylindrique d'axe de symétrie X-X' et forme un récipient creux qui est placé en suspension dans la cuve 3. Le tamis 4 est placé en suspension dans la cuve 3 en étant supporté et entraîné en rotation par l'arbre d'entraînement 7. Les produits végétaux sont introduits au travers de la goulotte 5 pour être ensuite placés en appui contre le tamis 4 par l'intermédiaire du poussoir 6 en vue d'extraire le jus de ces produits. Le poussoir 6 comporte une forme complémentaire à une forme de la goulotte 5. La cuve 3 et le tamis 4 sont coaxiaux.

Plus précisément, le tamis 4 forme un récipient creux circulaire. Le tamis présente une paroi radiale 33 et un fond 11. La paroi radiale 33 s'étend à partir du fond, parallèlement à l'axe X-X' et autour de ce même axe. Des trous 16 sont réalisés au travers de la paroi radiale 33 du tamis 4 de telle sorte que les trous débouchent dans la cuve 3 au travers de la paroi radiale 33 du tamis 4, depuis la cavité 13 du tamis 4 vers l'extérieur du tamis 4. Le fond 11 du tamis forme un disque plein et est un endroit du tamis 4 contre lequel sont placés en appui les produits à traiter. Le tamis 4 comporte un moyeu central (non représenté) pour la coopération avec l'arbre d'entraînement 7. Le fond 11 présente une surface de contact avec les produits ou surface d'extraction 12 délimitant en partie une cavité 13 du tamis 4. Le fond 11 présente également une surface externe 14 faisant face à la cuve 3. Le poussoir 6 présente une autre surface de contact avec les produits ou surface d'appui 15. La surface d'extraction 12 et la surface d'appui 15 sont destinées à être placées en regard l'une de l'autre. La surface d'extraction 12 et la surface d'appui 15 se font face.

Le fond 11 du tamis 4 présente des moyens de dilacération 17. Ces moyens de dilacération 17 sont formés par la surface d'extraction 12 et se présentent sous la forme d'aspérités 17. Chaque aspérités forment une surélévation locale en direction de la goulotte 5 d'une partie de la surface d'extraction 12. Ces aspérités 17 sont tranchantes. L'ensemble de ces aspérités 17 permet de dilacérer les produits végétaux lorsqu'ils sont appuyés contre le tamis 4, sur la surface d'extraction 12.

Les produits sont introduits dans l'appareil par une extrémité supérieure 34 de la goulotte opposée à une extrémité inférieure 35 et tombent sur le fond 11 du tamis 4. Le poussoir 6 est ensuite engagé dans la goulotte 5 et permet de presser les produits contre le fond 11 denté.

Plus précisément, les produits introduits dans la cavité 13 du tamis 4 sont dilacérés par le fond 11 du tamis 4 et sont pressés contre la paroi radiale 33 par la force centrifuge. Une partie du jus sors des produits sous l'action de cette force et passe au travers des trous 16 de la paroi radiale 33. Une partie de la pulpe du fruit passe également à travers les trous 16. La fraction résiduelle des produits forme une couche ou talon 28 dont l'épaisseur s'accroît avec la quantité de produit introduite. Ce talon 28 est entraîné en rotation avec le tamis 4.

Le jus se récolte ensuite dans la cuve 3 en dessous du tamis 4. Le jus peut être extrait de la cuve 3 par l'écoulement du jus depuis la cuve 3 au travers d'un orifice latéral 8 d'évacuation prolongé d'un bec verseur incliné, l'orifice latéral 8 étant ménagé dans une paroi latérale de ladite cuve 3 et situé à un endroit proche d'un fond 9 de la cuve 3. Le fond 9 de la cuve 3 est situé à un endroit de la cuve 3 qui est proche du socle 2 et qui est éloigné d'une entrée 10 des aliments de la goulotte 5.

L'écartement entre la goulotte 5 et le fond 11 du tamis 4 est suffisamment faible pour que les produits ne puissent pas s'échapper de la goulotte 5 sans être dilacérés par le fond 11 denté.

Le fait que la centrifugeuse 1 soit en position de fonctionnement signifie qu'elle est posée sur une table de travail ou une surface plane de manière à pouvoir être utilisée aux fins pour lesquelles elle a été conçue. C'est par rapport à une centrifugeuse en position de fonctionnement que l'on considère les latéralisations dans cette description. Dans cette description on considère qu'en position de fonctionnement, la cuve 3 est fixée sur le socle 2. En position normale de fonctionnement, l'axe de symétrie X-X' est disposé perpendiculairement par rapport à un plan dans lequel s'étend la table de travail.

Selon l'invention, le fond 11 du tamis 4 est étagé. Par étagé on entend que le fond 11 du tamis 4 comporte plusieurs niveaux. Un niveau donné est une portion du fond 11 du tamis 4 s'étendant circulairement par rapport à l'axe X-X', dans un plan qui est relativement parallèle au plan de la table de travail et qui est situé à une hauteur donnée par rapport au plan du travail. Une hauteur donnée est mesurée le long d'un axe qui est parallèle à l'axe X-X'. L'axe X-X' passe par un centre 32 du tamis 4.

Dans l'exemple figure 1, le fond 11 comporte quatre niveaux différents. Mais, le fond 11 pourrait comporter seulement deux niveaux (exemple non représenté). En coupe transversale figure 1, le fond 11 comporte un premier niveau 18, un deuxième niveau 19, un troisième niveau 20 et un quatrième niveau 21. Chacun de ces niveaux s'étend selon un diamètre qui est différent d'un niveau à un autre. Le premier niveau 18, le deuxième niveau 19, le troisième niveau 20 et le quatrième niveau 21 sont situés à des hauteurs différentes les uns des autres et par rapport au plan de la table de travail, le quatrième niveau 21 étant celui qui est situé le plus éloigné par rapport au plan de la table de travail. Le fond 11 du tamis 4 comporte également au moins une portion de liaison destinée à relier deux niveaux donnés.

Dans le cas de la figure 1, le premier niveau 18 est relié au deuxième niveau 19 par une première portion de liaison 22. Le deuxième niveau 19 est relié au troisième niveau par une deuxième portion de liaison 23. Le troisième niveau 20 est relié au quatrième niveau 21 par une troisième portion de liaison 24. Chacune de ces portions de liaison 22,23,24 s'étend circulairement autour de l'axe X-X'. Chacune des ces portions de liaison peut s'étendre perpendiculairement par rapport au plan de la table de travail. Ou bien, chacune de ces portions de liaison peut s'étendre dans un plan qui est incliné par rapport au plan de la table de travail.

Dans l'exemple figure 1, le fond 11 du tamis 4 est de forme globalement conique. Selon ce même exemple, une section du cône la plus étroite est située à un endroit proche de l'entrée 10 de la goulotte. Le premier niveau 18 est plus proche de la cuve 3 que ne l'est le quatrième niveau 21.

Selon l'invention, la face d'appui 15 du poussoir 6 peut être de forme complémentaire à la forme du fond 11 du tamis 4, figure 1. En effet, le poussoir 6 forme également quatre autres niveaux en correspondance des quatre niveaux 18, 19, 20, 21 du fond 11 du tamis 4, figure 1.

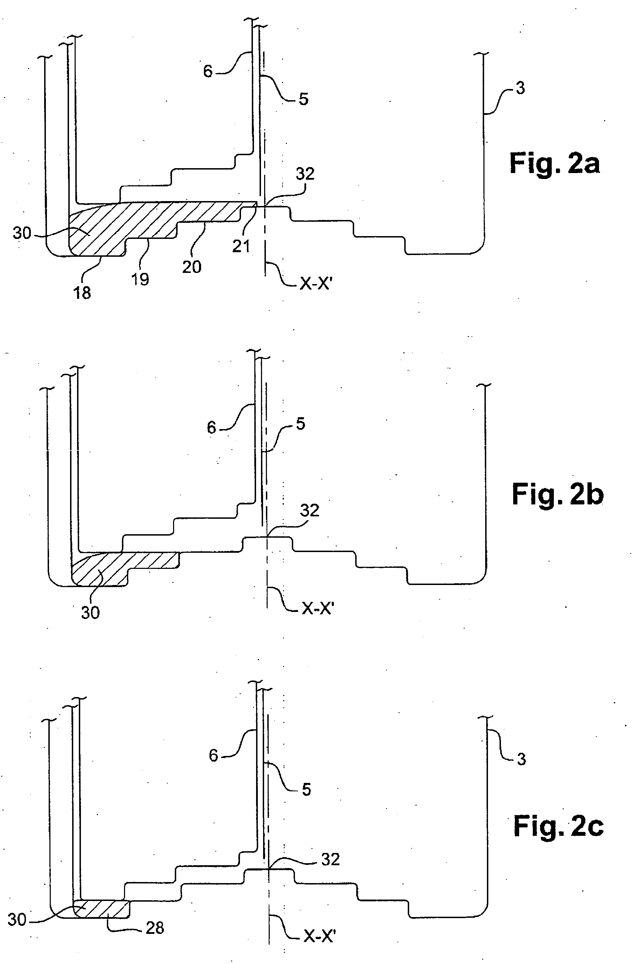

Dans un autre exemple figure 2, la face d'appui 15 du poussoir 6 peut comporter seulement deux niveaux avec un premier niveau 25 et un deuxième niveau 26, le deuxième niveau 26 étant représenté en traits pointillés. La forme du premier niveau 25 du poussoir 6 est complémentaire à la forme du premier niveau 18 du fond 11 du tamis 4. Le deuxième niveau 26 s'étend dans un plan qui est relativement parallèle au plan de travail de la centrifugeuse tout en recouvrant les trois autres niveaux du tamis. Une portion de liaison 27 du poussoir relie également le premier niveau 25 au deuxième niveau 26. Cette portion 27 peut s'étendre perpendiculairement par rapport au plan de la table de travail ou bien elle peut s'étendre de manière inclinée par rapport à ce même plan. Le premier niveau 25 du poussoir 6 est plus proche du fond 11 du tamis 4 que ne l'est le deuxième niveau 26 du poussoir 6.

Le traitement du produit 30 par la centrifugeuse, selon l'invention, est illustré figures 2a à 2c. Au fur et à mesure que le produit 30 est pressé contre le fond 11 du tamis 4 par le poussoir 6, le produit 30 disparaît du quatrième niveau 21 et du troisième niveau 20, figures 2a à 2b. Puis, le produit 30 disparaît du deuxième niveau 19, figure 2b à 2c. A la fin du traitement, il ne reste plus qu'un talon 28 du produit situé sur le dernier niveau ou premier niveau 18, le talon 28 étant le dernier morceau du produit 30 qui ne peut être traité du fait du jeu existant entre le poussoir 6 et le tamis 4. Le talon 28 est de largeur inférieure ou égale à une autre largeur du niveau sur lequel il est sensé rester, la largeur et l'autre largeur étant chacune mesurées le long d'un axe qui est perpendiculaire à l'axe X-X'.

Le fond du tamis peut être ascendant ou descendant. D'une manière générale, que le fond 11 du tamis 4 soit ascendant ou descendant, le talon 28 obtenu est toujours situé sur le niveau du fond 11 du tamis 4 situé le plus proche du socle 2.

Le tamis 4 peut être formé par un matériau du type acier, aluminium ou inox. Le tamis 4 peut être formé par matriçage ou par déformation de la matière.

Le poussoir 6 peut être réalisé en un matériau du type plastique et par moulage.

## Revendications

1. Appareil d'extraction (1) du jus et de la pulpe d'aliments comportant
- un socle (2) renfermant un moteur électrique à partir duquel s'étend un arbre d'entraînement en rotation (7),
- une cuve (3) posée sur le socle et traversée par l'arbre d'entraînement,
- une goulotte d'entrée (5) de l'aliment,
- un tamis (4) placé dans la cuve et étant supporté et entraîné en rotation par l'arbre d'entraînement, le tamis comportant une paroi radiale (33) percée de plusieurs trous (16) et un fond (11) plein, l'aliment étant destiné à être au contact du fond et de la paroi tout en transitant au travers des trous, et
- un poussoir (6) insérable dans la goulotte, l'aliment étant maintenu en appui contre le fond du tamis par l'intermédiaire du poussoir en vue d'extraire de cet aliment son jus qui se récolte dans la cuve située en dessous du tamis, **caractérisée en ce que**
- le fond du tamis est étagé.

2. Centrifugeuse selon la revendication 1, **caractérisée en ce que** le poussoir comporte une face d'appui (15) qui est de forme complémentaire à une forme du fond du tamis, la face d'appui étant également une surface destinée à être au contact de l'aliment.

3. Centrifugeuse selon l'une des revendications 1 à 2, **caractérisée en ce que** le fond du tamis est de forme globalement conique, une section du cône la plus étroite étant située à un endroit du fond proche d'une entrée (10) de la goulotte.

4. Tamis (4) d'un appareil d'extraction (1) du jus et de la pulpe d'aliments, le tamis comportant une paroi radiale (33) et un fond (11), la paroi du tamis étant percée de trous (33) au travers desquels est destiné à transiter l'aliment après pression de ce même aliment contre la paroi du tamis, le fond du tamis étant plein, **caractérisé en ce que** le fond du tamis est étagé.

## Claims

1. An extraction device (1) for extracting juice and pulp from food products comprising
- a base (2) enclosing an electric motor from which extends a rotating drive shaft (7),
- a tank (3) positioned on the base and crossed by the drive shaft,
- an inlet spout (5) for the food product,
- a strainer (4) placed inside the tank and supported and spun by the drive shaft, the strainer comprising a radial wall (33) perforated with several holes (16) and a solid bottom (11), the food product designed to be in contact with the bottom and the wall by passing through the holes, and
- a food pusher (6) which can be inserted into the spout, the food product being pushed against the bottom of the strainer via the food pusher in order to extract the juice of the food product, which is collected in the tank located underneath the strainer, **characterised in that**
- the bottom of the strainer is stair-shaped.

2. A centrifuge according to claim 1, **characterised in that** the food pusher comprises a supporting surface (15) in a shape complementing the shape of the strainer, the supporting surface being also a surface designed to be in contact with the food product.

3. A centrifuge according to one of claims 1 to 2, **characterised in that** the bottom of the strainer is cone-shaped overall, one of the narrowest sections of the cone being located in a position on the bottom, close to an inlet (10) of the spout.

4. A strainer (4) of an extraction device (1) for extracting juice and pulp from food products, the strainer comprising a radial wall (33) and a bottom (11), the strainer wall being perforated with holes (33) through which the food product is designed to be passed after pressing of this same food product against the strainer wall, the bottom of the strainer being solid, **characterised in that** the bottom of the strainer is stair-shaped.

## Patentansprüche

1. Gerät zum Entziehen (1) des Saftes und der Pulpe von Lebensmitteln mit
- einem Sockel (2), der einen Elektromotor einschließt, aus dem eine Rotationsantriebswelle (7) ragt,
- einem Gefäß (3), das auf den Sockel gestellt wird, und durch das die Antriebswelle führt,
- einer Laderinne (5) für die Lebensmittel,
- einem Sieb (4), das im Gefäß angebracht ist und durch die Antriebswelle gehalten und in Rotation versetzt wird, wobei das Sieb eine Radialwand (33) mit mehreren Löchern (16) und einen vollen Boden (11) aufweist, wobei die Lebensmittel dazu bestimmt sind, den Boden und die Wand zu berühren, und dabei durch die Löcher befördert zu werden, und
- einem Stößel (6), der in die Rinne eingeführt werden kann, wobei die Lebensmittel durch den Stößel mit dem Ziel gegen den Boden des Siebes gedrückt werden, diesem Lebensmittel seinen Saft zu entziehen, der im Gefäß aufgefangen wird, das sich unter dem Sieb befindet, **dadurch gekennzeichnet, dass**
- der Siebboden abgestuft ist.

2. Zentrifuge nach Anspruch 1, **dadurch gekennzeichnet, dass** der Stößel über eine Auflagefläche (15) verfügt, die komplementär zur Fläche des Siebbodens geformt ist, wobei die Auflagefläche auch eine Fläche darstellt, die in Kontakt mit den Lebensmitteln treten soll.

3. Zentrifuge nach einem der Ansprüche 1 bis 2, **dadurch gekennzeichnet, dass** der Siebboden im Allgemeinen eine konische Form aufweist, wobei sich ein engster Querschnitt des Konus an einer Stelle des Bodens nahe einem Einlauf (10) der Rinne befindet.

4. Sieb (4) eines Gerätes zum Entziehen (1) des Saftes und der Pulpe von Lebensmitteln, wobei das Sieb eine Radialwand (33) und einen Boden (11) enthält, wobei die Siebwand mit Löchern (33) versehen ist, durch die die Lebensmittel nach dem Drücken derselben gegen die Siebwand befördert werden, und der Siebboden voll ist, **dadurch gekennzeichnet, dass** der Siebboden abgestuft ist.
